# EUROPEAN PATENT APPLICATION

(11) **EP 2 076 056 A1**
(43) Date of publication of application: **01.07.2009**
(21) Application number: 08757745.8
(22) Date of filing: 17.06.2008
(51) Int. Cl.: H04Q 1/00

(54) **MANAGEMENT METHOD FOR INTELLIGENT TERMINAL SYSTEM AND INTELLIGENT TERMINAL**

(30) Priority: 20.06.2007 CN 200710111447
(71) Applicant: Huawei Technologies Co., Ltd., Longgang District, Shenzhen Guangdong 518129 (CN)
(72) Inventor: DUAN, Gan, Shenzhen Guangdong 518129 (CN); CHEN, Guoqiao, Shenzhen Guangdong 518129 (CN); WANG, Chenxi, Shenzhen Guangdong 518129 (CN); WEI, Qiuyang, Shenzhen Guangdong 518129 (CN); CHEN, Lei, Shenzhen Guangdong 518129 (CN); GAO, Xiaoliang, Shenzhen Guangdong 518129 (CN)
(74) Representative: Gulde Hengelhaupt Ziebig & Schneider
(86) International application number: PCT/CN2008/071334
(87) International publication number: WO 2008/154862

(57) **Abstract**

A management method for an intelligent terminal system includes: starting the management function of the intelligent terminal system, acquiring an extension software package, verifying the acquired extension software package, executing functions of the extension software package if the verification is passed. An intelligent terminal is further disclosed in the present invention

## Description

The present application claims the priority of Chinese patent application No. 200710111447.6, entitled "Intelligent Terminal and Method for Managing Intelligent Terminal System", filed with SIPO on June 20, 2007, the whole of which is incorporated by reference herein for all purpose.

### FIELD OF THE INVENTION

The present invention relates to communication field, and more particularly, to an intelligent terminal and a method for managing an intelligent terminal system.

### BACKGROUND

An intelligent terminal is the developing trend of current terminals. The intelligent terminal has an operating system, which manages the operation of the entire terminal, coordinates resources required for operation of the terminal and implements corresponding functions of the terminal. Application programs running on the operating system are compatible and extendable, and no modification is required for the operating system when application programs change. An intelligent terminal system includes an operating system, application programs and user data. The management of an intelligent terminal system refers to management of the operating system, application programs and user data, such as upgrading of the intelligent terminal system and extension of application programs.

In the conventional art, the method for an intelligent terminal with Windows mobile system to extend application programs is as follows: establishing firstly a connection between the intelligent terminal and a personal computer installed with Windows system; installing device drivers and synchronizing software such as ActiveSync on the personal computer; specifying, by using the synchronizing software, the intelligent terminal as the installation path for the extension software package carrying application programs, so as to transmit the extension software package to the intelligent terminal; and then confirming the installation of the extension software package on the intelligent terminal, and running the extension software package carrying application programs by entering a specific menu of the intelligent terminal.

During the implementation of the present invention, the inventor found that there are at least the following problems in the conventional art: the intelligent terminal needs to accomplish application program extension in cooperation with a personal computer, which requires that the personal computer has connection interfaces that match intelligent terminal, such as a USB interface or a Bluetooth interface, and related device drivers and synchronizing software need to be installed on the personal computer. Thus, the process of application program extension involves many operations and is likely to cause errors. Such a complicated intelligent terminal system management method is inconvenient for a general user to implement.

### SUMMARY

The technical problem to be solved by embodiments of the present invention is to provide a management method for intelligent terminal system and an intelligent terminal, so as to easily and conveniently manage the intelligent terminal system.

In view of the above-mentioned technical problem, the various embodiments of the present invention are implemented by the following technical solutions.

A management method for an intelligent terminal system includes: starting management function of the intelligent terminal system; acquiring an extension software package; verifying the acquired extension software package; and executing functions of the extension software package that has passed the verification.

An intelligent terminal includes: a management function starting unit adapted to start management function of an intelligent terminal system; an extension software package acquiring unit adapted to acquire an extension software package after the management function starting unit starts the management function of the intelligent terminal system; an extension software package verifying unit for verifying the extension software package acquired by the extension software package acquiring unit; and a management function executing unit for executing functions of the extension software package after the verification of the extension software package by the extension software package verifying unit is passed.

As can be seen from the above embodiments of the present invention, in the various embodiments, the management function of the intelligent terminal system is started, the extension software package is acquired, the acquired extension software package is verified and if the verification is passed, and the functions of the extension software package is executed. In the present invention, the intelligent terminal system is managed by acquiring the extension software package and verifying the extension software package and executing functions of the extension software package. Thus, the intelligent terminal system may be securely and easily managed with this solution.

### BRIEF DESCRIPTION OF THE DRAWINGS

Fig. 1 is a flowchart of a management method for an intelligent terminal system according to a first embodiment of the present invention;

Fig. 2 is a flowchart of an upgrading method for an intelligent terminal system according to a third embodiment of the present invention;

Fig. 3 is a flowchart of an upgrading method for an intelligent terminal system according to a sixth embodiment of the present invention; and

Fig. 4 is a schematic diagram of an intelligent terminal according to a fifteenth embodiment of the present invention.

### DETAILED DESCRIPTION

Embodiments of the present invention provide management methods for an intelligent terminal system and intelligent terminals.

### First Embodiment:

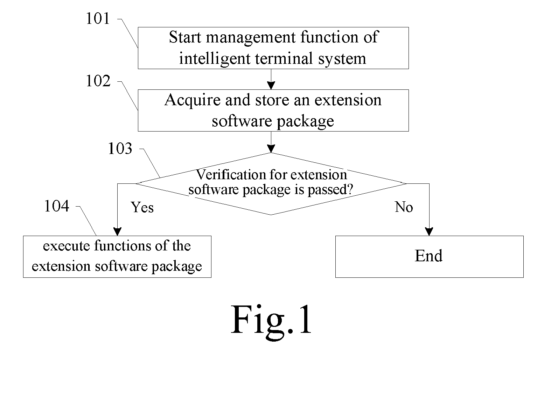

Referring to Fig. 1, a flowchart of the management method for an intelligent terminal system according to the first embodiment of the present invention is illustrated as follows.

Step 101: The management function of the intelligent terminal system is started.

There may be two ways to start the management function of an intelligent terminal system. One way is to activate the management function of the intelligent terminal system and load device drivers on extension storage medium, during initialization of the intelligent terminal system. Alternatively, the management function of the intelligent terminal system is started during normal operation of the intelligent terminal system.

Step 102: An extension software package is acquired and stored.

The extension software package may be acquired from the extension storage medium of the intelligent terminal and stored into a buffer of the intelligent terminal. Here, the extension storage medium may be a Multi Media Card (MMC), a Secure Digital Card (SD), a Mini Secure Digital Card (Mini SD) or a Micro Secure Digital Card (Micro SD). It is appreciated that, besides the above-mentioned media, the extension storage medium may also be some other storage devices that are compatible with the intelligent terminal, such as an optical storage medium or a computer network storage medium.

Step 103: The extension software package is verified, and if the verification is passed, the process proceeds with Step 104; otherwise, the management of the intelligent terminal system is terminated.

It is noted that, in view of the possible loss of part of the extension software package during the transmission of the extension software package, when the extension software package acquired for the first time fails to pass the verification, the same extension software package may be acquired again from the extension storage medium.

In this embodiment, verification of the extension software package includes integrity verification and validity verification, wherein the integrity verification may be carried out with Message-Digest Algorithm version.5 (MD5) or Rivest-Shamir-Adleman (RSA), and the validity verification may be carried out with MD5 or RSA. It is appreciated that other encryption algorithms may be used in addition to the above encryption algorithms.

Key data such as encryption algorithm and security keys may be stored in a one time program (OTP) area of the intelligent terminal. The OTP area is **characterized in that,** once the manufacturer has written data into this area for a first time, it cannot be written again in order to protect security of key data.

Step 104: Functions of the extension software package are executed.

The extension software package may be composed of a plurality of functional submodules that specifically record operable operations. The above function of executing functions of the extension software package is to execute operable operations recorded by the functional submodules carried in the extension software package.

The functional submodules may be a system upgrade submodule, a system backup submodule, a system recovery submodule, a system detection submodule, a user information backup submodule, a user information recovery submodule, an application program extension submodule or an anti-virus submodule.

Table 1 shows the structure of the extension software package of the present embodiment with good security and extendibility.

**Table 1**

| Number | Block Name | Description | Remarks |
|---|---|---|---|
| 1 | File header | A feature code for identifying a file, including a prompt character string for a user (to be displayed on the interface) | necessary |
| 2 | MD5_RSA | Data obtained by carrying out MD5 calculation on MD5_list block and then encrypting it with downloaded code private key (KEY_A) | necessary |
| 3 | MD5_LIST | A list of MD5 verification values of the following modules that are arrayed as a whole according to an order and then segmented according to MD5_LENGTH (such as every 32K), each segment is subjected to MD5 verification to obtain a 16 byte MD5 value and then arranged sequentially to obtain the MD5 list. | necessary |
| 4 | Header information of functional submodule 1 | Feature code, support platform, version information, module generation time, security level and copyright information, etc | These three parts constitute the first functional submodule |
| 5 | Resources of functional submodule 1 | Character string and other resources (support multiple languages) | |
| 6 | Functional submodule 1 | Functional module entity | |
| 7 | Header information of functional submodule 2 | ............ | These three parts constitute the second functional submodule with the same structure as the first one |
| 8 | Resources of functional submodule 2 | .............. | |
| 9 | Functional submodule 2 | .............. | |
| ... | ...... | | |
| ... | ....... | | |

In Table 1, information on extension software package is stored in the file header, and MD5_RSA and MD5_LIST are provided for security. As can be seen from the above table, each functional submodule is divided into the following three parts:
( 1 ) header information for storing a feature code, a support platform, version information, a module generation time, a security level, a copyright information (designed for some third party software),
( 2 ) resources for storing character strings and other resources, which may have multiple sets of character strings to support multiple languages, and
( 3 ) module entity for storing binary file of programs.

Multiple functional submodules may be organized into one same extension software package, for example, an extension software package includes a system detection submodule and a system backup submodule, and functions of a detection system and a backup system may be realized when the extension software package is executed.

### Second Embodiment:

This embodiment is based on the first embodiment, wherein the extension software package carries a system upgrade submodule and this embodiment may accomplish upgrading of the intelligent terminal system. The updating of the system refers to acquiring system upgrade data packets containing new version of the current operating system data, and writing the new version of the operating system in the intelligent terminal system to replace old version of the operating system.

Step 201: The management function of the intelligent terminal system is started.

Step 202: An extension software package carrying a system upgrade submodule is acquired and stored.

Step 203: The extension software package is verified, and if the verification is passed, the process proceeds with Step 204; otherwise, the current upgrading is terminated.

Step 204: The function of the system upgrade submodule carried in the extension software package is run. The system upgrade submodule may include an upgrade bootstrap program and a system upgrade data package, and the system upgrade data packet includes the new version of the current operating system data.

Step 205: The system upgrade data packet is acquired from the extension software package, and the intelligent terminal system is upgraded with the system upgrade data packet.

Step 206: The upgrading is complete.

### Third Embodiment:

In order to improve flexibility in the upgrading process, the system upgrade data packet in the second embodiment may be separated from the system upgrade submodule. Another embodiment based on the first embodiment is as follows.

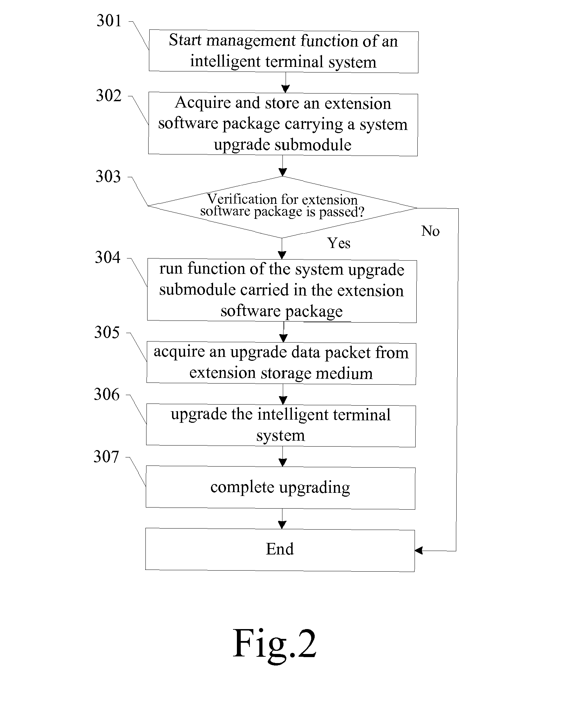

Referring to Fig. 2, a flowchart of the upgrading method for an intelligent terminal system according to the third embodiment of the present invention is illustrated as follows.

Step 301: The management function of the intelligent terminal system is started.

Step 302: An extension software package carrying a system upgrade submodule is acquired and stored.

Step 303: The extension software package is verified, and if the verification is passed, the process proceeds with Step 304; otherwise, the current upgrading is terminated.

Step 304: The function of the system upgrade submodule carried in the extension software package is run. The system upgrade submodule includes an upgrade bootstrap program but no system upgrade data packet.

Step 305: The system upgrade data packet is acquired from the extension storage medium.

Step 306: The intelligent terminal system with the system upgrade data packet is upgraded.

Step 307: The upgrading is complete.

### Fourth Embodiment:

In order to improve security in upgrading process, user authentication may be carried out prior to acquiring system upgrade data packet in the third embodiment. Another embodiment based on the third embodiment is as follows.

Step 401: The management function of the intelligent terminal system is started.

Step 402: An extension software package carrying a system upgrade submodule is acquired and stored.

Step 403: The extension software package is verified, and if the verification is passed, the process proceeds with Step 404; otherwise, the current upgrading is terminated.

Step 404: The function of the system upgrade submodule carried in the extension software package is run.

Step 405: It is determined whether the user authentication is passed, and if the authentication is passed, the process proceeds with Step 406; otherwise, the current upgrading is terminated.

Step 406: The system upgrade data packet is acquired from the extension storage medium.

Step 407: The intelligent terminal system with the system upgrade data packet is upgraded.

Step 408: The upgrading is complete.

### Fifth Embodiment:

In order to improve pertinence in the upgrading process, a user upgrading policy may be determined prior to acquiring system upgrade data packet in the fourth embodiment. Another embodiment based on the fourth embodiment is as follows.

Step 501: The management function of the intelligent terminal system is started.

Step 502: An extension software package carrying a system upgrade submodule is acquired and stored.

Step 503: The extension software package is verified, and if the verification is passed, the process proceeds with Step 504; otherwise, the current upgrading is terminated.

Step 504: The function of the system upgrade submodule carried in the extension software package is run.

Step 505: It is determined whether the user authentication is passed, and if the authentication is passed, the process proceeds with Step 506; otherwise, the current upgrading is terminated.

Step 506: An upgrading policy is determined. According to version information of the operating system and user requirements, an upgrading mode is selected, for example, only writing newly added contents of the new version of the operating system or only writing damaged contents of the old version of the operating system.

Step 507: The system upgrade data packet is acquired from the extension storage medium.

Step 508: The intelligent terminal system is upgraded with the system upgrade data packet.

Step 509: The upgrading is complete.

### Sixth Embodiment:

In order to improve security of the system upgrade data packet, the system upgrade data packet may be verified prior to writing the system upgrade data packet into the intelligent terminal system in the fifth embodiment. Another embodiment based on the fifth embodiment is as follows.

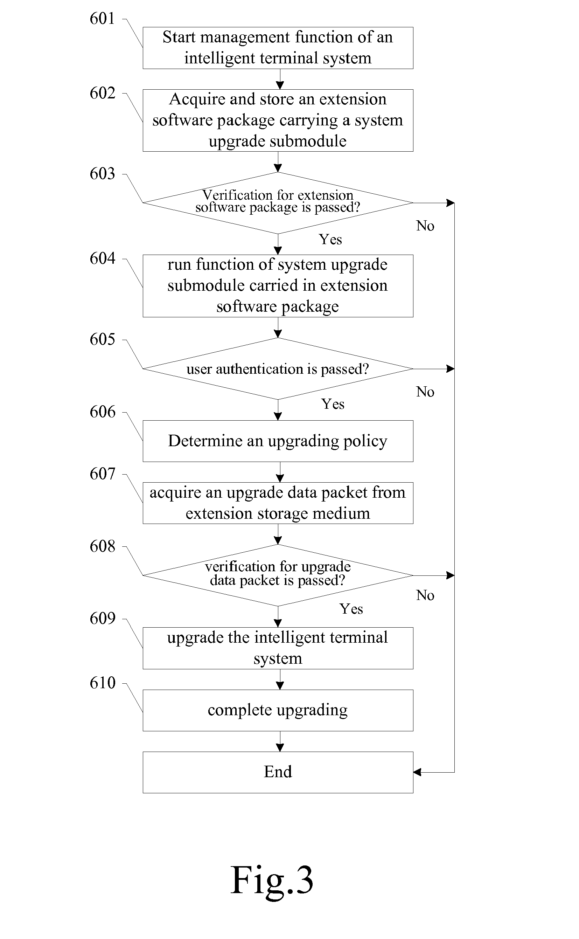

Referring to Fig. 3, a flowchart of the upgrading method for an intelligent terminal system according to the sixth embodiment of the present invention is illustrated as follows.

Step 601: The management function of the intelligent terminal system is started.

Step 602: An extension software package carrying a system upgrade submodule is acquired and stored.

Step 603: The extension software package is verified, and if the verification is passed, the process proceeds with Step 604; otherwise, the current upgrading is terminated.

Step 604: The function of the system upgrade submodule carried in the extension software package is run.

Step 605: It is determined whether the user authentication is passed, and if the authentication is passed, the process proceeds with Step 606; otherwise, the current upgrading is terminated.

Step 606: An upgrading policy is determined.

Step 607: The system upgrade data packet is acquired from the extension storage medium.

Step 608: The system upgrade data packet is verified, and if the verification is passed, the process proceeds with Step 609; otherwise, the current upgrading is terminated.

Step 609: The intelligent terminal system is upgraded with the system upgrade data packet according to the determined upgrading policy.

Step 610: The upgrading is complete.

In this embodiment, in order to make the best use of the memory of the intelligent terminal, when acquiring the system upgrade data packet, a method for reading data and verifying data simultaneously may be used, that is, upon a certain length of data is read, it is verified. Thus, only a small buffer space is needed to accomplish the verification of the entire system upgrade data packet. For example, several thousand of bytes of buffer space may be used to accomplish the verification of a system upgrade data packet of several megabytes.

For a smooth completion of the upgrading process, characteristics shown in Table 2 are defined for the system upgrade data packet in the present embodiment.

**Table 2**

| Name | Description |
|---|---|
| Upgrading object management | The system upgrade data packet may be composed of multiple files. In addition to be identified with a file name, special codes may also be set at specific locations in each file to identify file contents. This function may prevent the upgrading process from being affected by user's mis-operation such as attempting to modify a file name. |
| Upgrading version management | It may be set that software of different models, different operators or different networks can not be upgraded from each other. It may be set that prepaid terminal software and post-paid terminal software can not be upgraded from each other. It may be set that a version cannot be roll-backed, i.e. a new version can not be roll-backed to an old version. |
| System upgrade data packet validity management | The encryption cryptext of the entire upgrading file is stored at a certain location of the system upgrade data packet" and the system upgrade data packet is verified during upgrading. This function may ensure that the system upgrade data packet is acquired from legal channel and has not suffered any modification. |
| System upgrade data packet integrity management | A cyclic redundancy check (CRC) value for the upgrading file is stored at a certain location in the system upgrade data packet. During upgrading, the cyclic redundancy check value for the upgrading file to be copied into the memory is re-calculated, and compared with the stored value to ensure the integrity of the system upgrade data packet. This function may avoid upgrading failure of the system upgrade data packet due to damage of the storage medium or error during data transmission. |

During the upgrading process, in order to better monitor the upgrading progress, in this embodiment, colors may be used to display the current upgrading state information on the screen of the intelligent terminal. One the one hand, a red progress bar and a green progress bar are displayed on the screen, wherein the red progress bar indicates the progress of reading and verifying system upgrade data packet and the green progress bar indicates the progress of upgrading, and thus a user may conveniently check the current upgrading status from the red and green progress bars. On the other hand, error messages are prompted by displaying different colors on the entire screen, and the error meanings of different colors are as follows.

**Table 3**

| Error meaning | Screen color |
|---|---|
| Extension storage medium is not present or damaged | Red |
| Extension storage medium is unwritable | Yellow |
| System upgrade data packet is not present | Pink |
| System upgrade data packet version is error | Blue |
| System upgrade data packet is invalid | Green |
| System upgrade data packet is incomplete | Deep blue |
| Other errors occur in the upgrading process | Orange |

### Seventh Embodiment:

This embodiment is based on the first embodiment, wherein the extension software package carries a system backup submodule and this embodiment may accomplish backup of the intelligent terminal system. The backup of the intelligent terminal system refers to backing-up data of the intelligent terminal system to an extension storage medium.

Step 701: The management function of the intelligent terminal system is started.

Step 702: An extension software package carrying a system backup submodule is acquired and stored.

Step 703: The extension software package is verified, and if the verification is passed, the process proceeds with Step 704; otherwise, the current backup is terminated.

Step 704: The function of the system backup submodule carried in the extension software package is run.

Step 705: It is determined whether the user authentication is passed, and if the authentication is passed, the process proceeds with Step 706; otherwise, the current backup is terminated.

Step 706: It is checked whether the storage space of the extension storage medium is enough, and if the storage space is enough, the process proceeds with Step 707; otherwise, the current backup is terminated. Prior to the backup, information on the extension storage medium is collected so as to determine whether the extension storage medium can meet the backup requirements.

Step 707: System data is read according to a backup policy and the data is written into the extension storage medium. For example, the system storage space is divided into an operating system unit, an application program unit and a user data unit, and data of these units are written into the storage medium space in order of the storage space addresses.

Step 708: The written data is verified to ensure the correctness of the written data; if the verification is passed, the process proceeds with Step 709; otherwise, the current backup is terminated. For example, data written last time may be read from the extension storage medium in a reading back manner to be compared with the data before written.

Step 709: It is determined whether the backup is completed, and if the backup is completed, the backup is over; otherwise, the process proceeds with Step 707.

### Eighth Embodiment:

This embodiment is based on the first embodiment, wherein the extension software package carries a system recovery submodule and this embodiment may accomplish recovery of the intelligent terminal system. The recovery of the intelligent terminal system refers to recovering the intelligent terminal system with system data in the extension storage medium.

Step 801: The management function of the intelligent terminal system is started.

Step 802: An extension software package carrying a system recovery submodule is acquired and stored.

Step 803: The extension software package is verified, and if the verification is passed, the process proceeds with Step 804; otherwise, the current recovery is terminated.

Step 804: The function of the system recovery submodule carried in the extension software package is run.

Step 805: It is determined whether the user authentication is passed, and if the authentication is passed, the process proceeds with Step 806; otherwise, the current recovery is terminated.

Step 806: A recovery policy is determined. The recovery policy includes recovering all system data, recovering part of system data, recovering from user backup system data or recovering from standard system data.

Step 807: Related data is read from the extension storage medium according to the determined recovery policy. For example, the system storage space is divided into an operating system unit, an application program unit and a user data unit. When only failure in the application program unit is detected, only data in this application program unit needs to be recovered, thereby enhancing the recovery efficiency.

Step 808: The read data is verified, and if the verification is passed, it is copied to corresponding location in the intelligent terminal system; otherwise, the current recovery is terminated.

In order to make the best use of memory of the intelligent terminal, reading data and verifying data may be carried out simultaneously when reading data.

Step 809: The recovery is complete.

### Ninth Embodiment:

This embodiment is based on the first embodiment, wherein the extension software package carries a system detection submodule and this embodiment may accomplish detection of an intelligent terminal system. The detection of the intelligent terminal system refers to collecting information on software and hardware of the intelligent terminal and making a diagnosis according to the information.

Step 901: The management function of the intelligent terminal system is started.

Step 902: An extension software package carrying a system detection submodule is acquired and stored.

Step 903: The extension software package is verified, and if the verification is passed, the process proceeds with Step 904; otherwise, the detection is terminated.

Step 904: The function of the system detection submodule carried in the extension software package is run.

Step 905: It is determined whether the user authentication is passed, and if the authentication is passed, the process proceeds with Step 906; otherwise, the current detection is terminated.

Step 906: A detection policy is determined. The detection policy for software and hardware of the intelligent terminal may be determined according to intelligent terminal model number, software version number and hardware version number.

Step 907: The intelligent terminal is detected according to the detection policy. If any problem in the hardware is found, repair may be attempted in a software manner.

Step 908: The detection is complete. The detection information may be written into a log.

### Tenth Embodiment:

This embodiment is based on the first embodiment, wherein the extension software package carries a user information backup submodule and this embodiment may accomplish backup of user information of the intelligent terminal system. The backup of user information of an intelligent terminal system refers to backing-up user data stored in the intelligent terminal system into an extension storage medium, for example, backing-up users' phone book, address list, schedule and short messages.

Step 1001: The management function of the intelligent terminal system is started.

Step 1002: An extension software package carrying a user information backup submodule is acquired and stored.

Step 1003: The extension software package is verified, and if the verification is passed, the process proceeds with Step 1004; otherwise, the current user information backup is terminated.

Step 1004: The function of the user information backup submodule carried in the extension software package is run.

Step 1005: It is determined whether the user authentication is passed, and if the authentication is passed, the process proceeds with Step 1005; otherwise, the current user information backup is terminated.

Step 1006: User data in the system is read according to a user information backup policy, and the data is written into the extension storage medium. In this step, user data written into the extension storage medium may be encrypted to enhance security of user information.

Step 1007: The written data is verified. To ensure the correctness of the written data, data written last time may be read from the extension storage medium in a reading back manner to be compared with the data before written. If the verification is passed, the process proceeds with Step 1008; otherwise, the current user information backup is terminated.

Step 1008: It is determined whether the user information backup is completed, if the backup is completed, the user information backup is terminated; otherwise, the process proceeds with Step 1006.

### Eleventh Embodiment:

This embodiment is based on the first embodiment, wherein the extension software package carries a user information recovery submodule and this embodiment may accomplish recovery of user information of the intelligent terminal system. The recovery of the user information of an intelligent terminal system refers to recovering the user data in the intelligent terminal system with the user data in the extension storage medium.

Step 1101: The management function of the intelligent terminal system is started.

Step 1102: An extension software package carrying a user information recovery submodule is acquired and stored.

Step 1103: The extension software package is verified, and if the verification is passed, the process proceeds with Step 1104; otherwise, the current user information recovery is terminated.

Step 1104: The function of the user information recovery submodule carried in the extension software package is run.

Step 1105: It is determined whether the user authentication is passed, if the authentication is passed, the process proceeds with Step 1106; otherwise, the current user information recovery is terminated.

Step 1106: User data is read from the extension storage medium. If the read user data is encrypted, the user data needs to be decrypted.

Step 1107: The read user data is copied to corresponding location in the intelligent terminal system.

Step 1108: The user information recovery is complete.

### Twelfth Embodiment:

This embodiment is based on the first embodiment, wherein the extension software package carries an application program extension submodule and this embodiment may accomplish extension of system application programs. The extension of system application programs refers to adding or changing application programs of the original system.

Step 1201: The management function of the intelligent terminal system is started.

Step 1202: An extension software package carrying an application program extension submodule is acquired and stored.

Step 1203: The extension software package is verified, and if the verification is passed, the process proceeds with Step 1204; otherwise, the current extension is terminated.

Step 1204: The function of the application program extension submodule carried in the extension software package is run.

Step 1205: It is determined whether the user authentication is passed, and if the authentication is passed, the process proceeds with Step 1206; otherwise, the current extension is terminated.

Step 1206: An extension policy is determined. The extension policy for application software of the intelligent terminal may be determined according to intelligent terminal model number, software version number and hardware version number.

Step 1207: An application program extension data packet is acquired from the extension storage medium.

Step 1208: The application program extension data packet is verified, and if the verification is passed, the process proceeds with Step 1209; otherwise, the current extension is terminated.

Step 1209: The read data is copied to corresponding location in the intelligent terminal system.

Step 1210: The extension is complete.

### Thirteenth Embodiment:

This embodiment is based on the first embodiment, wherein the extension software package carries a system anti-virus submodule and this embodiment may accomplish detection of virus of the intelligent terminal system. The virus-detection of the intelligent terminal system refers to searching virus in the system according to virus identification libraries and processing virus files.

Step 1301: The management function of the intelligent terminal system is started.

Step 1302: An extension software package carrying a system anti-virus submodule is acquired and stored.

Step 1303: The extension software package is verified, and if the verification is passed, the process proceeds with Step 1304; otherwise, the current virus detection is terminated.

Step 1304: The function of the system anti-virus submodule carried in the extension software package is run.

Step 1305: It is determined whether the user authentication is passed, and if the authentication is passed, the process proceeds with Step 1306; otherwise, the current virus detection is terminated.

Step 1306: A virus detection policy is determined. The virus detection policy may be determined according to intelligent terminal model number, software version number and hardware version number.

Step 1307: The virus identification library is loaded.

Step 1308: Virus for the intelligent terminal system is detected, i.e. scanning system files, searching virus files according to the virus identification library, processing virus files such as deleting infected files after backed up.

Step 1309: Virus detection is complete and the virus detection information is written into a log.

### Fourteenth Embodiment:

The present embodiment is based on the first embodiment and further comprises, after Step 104 in the first embodiment, a step of managing extension software package in the extension storage medium. Management of the extension software package may be version management of the extension software package by replacing the old version of extension software package with a new version of extension software package; downloading management of the extension software package by downloading the extension software package to the extension storage medium from Internet or downloading the extension software package to the extension storage medium from a personal computer or other equipments; and structure management of the extension software package by adding or deleting functional submodules in the extension software package. It is appreciated that other managements for the extension software package may be carried out in addition to the above-mentioned ones.

### Fifteenth Embodiment:

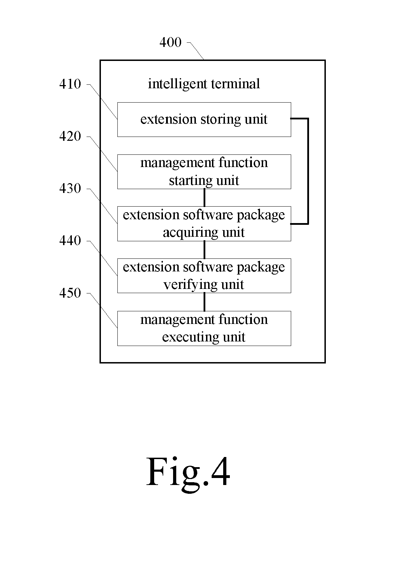

Referring to Fig. 4, a schematic diagram of the intelligent terminal according to an embodiment of the present invention is illustrated as follows. The intelligent terminal 400 of the present embodiment includes: an extension storing unit 410 adapted to store the extension software package; a management function starting unit 420 adapted to start the management function of the intelligent terminal system; an extension software package acquiring unit 430 adapted to acquire the extension software package after the management function starting unit 420 starts the management function of the intelligent terminal system; an extension software package verifying unit 440 adapted to verify the extension software package acquired by the extension software package acquiring unit 430 and generate a verification pass message if the verification is passed; a management function executing unit 450 adapted to execute the function of the extension software package after the extension software package verifying unit 440 generates the verification pass message.

The extension software package verifying unit 440 includes an integrity verifying unit adapted to perform integrity verification for the extension software package acquired by the extension software package acquiring unit, and a validity verifying unit adapted to perform validity verification for the extension software package acquired by the extension software package acquiring unit.

The extension storing unit 410 may be a multiple media card (MMC) or secure digital card (SD), or mini secure digital card (Mini SD) or micro secure digital card (Micro SD).

The extension software package may be an extension software package carrying a system upgrade submodule, an extension software package carrying a system backup submodule, an extension software package carrying a system recovery submodule, an extension software package carrying a system detection submodule, an extension software package carrying a user information backup submodule; an extension software package carrying a user information recovery submodule; an extension software package carrying an application program extension submodule or an extension software package carrying an anti-virus submodule.

After the management function starting unit 420 starts the management function of the intelligent terminal system, the extension software package acquiring unit 430 acquires the extension software package from the extension storing unit 410, the extension software package verifying unit 440 verifies the extension software package acquired by the extension software package acquiring unit 430, and after the verification is passed, the management function executing unit 450 executes the function of the extension software package.

As can be seen from the above embodiments of the present invention, in the embodiments, the management function of the intelligent terminal system is started to acquire the extension software package, the acquired extension software package is verified, and if the verification is passed, the functions of the extension software package is executed. In the present invention, the intelligent terminal system is managed by acquiring the extension software package, verifying the extension software package and executing functions of the extension software package. It can be seen that the intelligent terminal system may be securely and easily managed with this solution.

A detail description is given above for the management method for intelligent terminal system and the intelligent terminal provided by the embodiments of the present invention. The principle and implementations of the present invention are set forth with reference to specific examples herein, and description of the above embodiments is only for facilitating understanding the method and idea of the present invention. Meanwhile, modifications in specific implementations and application scopes easily occur to those skilled in the art in light of the teachings of the present invention. In summary, the description should not be construed as a limitation to the present invention.

## Claims

1. A method for managing an intelligent terminal system, comprising:
starting management function of the intelligent terminal system;
acquiring an extension software package;
verifying the acquired extension software package; and
executing functions of the extension software package that has passed the verification.

2. The management method of claim 1, wherein the extension software package is acquired from an extension storage medium.

3. The management method of claim 2, wherein the extension storage medium is a multiple media card (MMC), or a security digital card (SD), or a mini security digital card (Mini SD) or a micro security card (Micro SD).

4. The management method of claim 2, wherein the starting the management function of the intelligent terminal system comprises:
activating the management function of the intelligent terminal system; and
loading a device driver in the extension storage medium.

5. The management method of claim 1, wherein the verifying the acquired extension software package comprises performing integrity verification and validity verification for the acquired extension software package.

6. The management method of claim 5, wherein the performing integrity verification for the acquired extension software package comprises performing integrity verification with Message-Digest Algorithm version.5 (MD5) or Rivest-Shamir-Adleman (RSA).

7. The management method of claim 5, wherein performing validity verification for the acquired extension software package comprises performing validity verification with Message-Digest Algorithm version.5 or Rivest-Shamir-Adleman.

8. The management method of any one of claims 1 to 7, wherein the extension software package is an extension software package carrying a system upgrade submodule; and
the process of executing functions of the extension software package comprises:
running functions of the system upgrade submodule carried in the extension software package;
acquiring a system upgrade data packet; and
upgrading the intelligent terminal system with the system upgrade data packet.

9. The management method of claim 8, wherein the method further comprises:
authenticating a user before acquiring the system upgrade data packet; and
exiting the current upgrading if the authentication is not passed.

10. The management method of claim 8, wherein the method further comprises:
verifying the system upgrade data packet before upgrading the intelligent terminal system with the system upgrade data packet; and
exiting the current upgrading if the verification is not passed.

11. The management method of any one of claims 1 to 7, wherein the extension software package is an extension software package carrying a system backup submodule, an extension software package carrying a system recovery submodule, an extension software package carrying a system detection submodule, an extension software package carrying a user information backup submodule; an extension software package carrying a user information recovery submodule; an extension software package carrying an application program extension submodule, or an extension software package carrying an anti-virus submodule.

12. An intelligent terminal, comprising:
a management function starting unit adapted to start the management function of an intelligent terminal system;
an extension software package acquiring unit adapted to acquire an extension software package after the management function starting unit starts the management function of the intelligent terminal system;
an extension software package verifying unit adapted to verify the extension software package acquired by the extension software package acquiring unit; and
a management function executing unit adapted to execute functions of the extension software package after the verification for the extension software package by the extension software package verifying unit is passed.

13. The intelligent terminal of claim 12, wherein the extension software package verifying unit comprises:
an integrity verifying unit adapted to perform integrity verification for the extension software package acquired by the extension software package acquiring unit; and
a validity verifying unit adapted to perform validity verification for the extension software package acquired by the extension software package acquiring unit.

14. The intelligent terminal of claim 12, further comprising:
an extension storing unit adapted to store the extension software package;
wherein the extension software package acquiring unit acquires the extension software package from the extension storing unit.

15. The intelligent terminal of claim 14, wherein the extension storing unit is a multiple media card (MMC), a security digital card (SD), a mini security digital card (Mini SD) or a micro security card (Micro SD).

16. The intelligent terminal of any one of claims 11 to 15, wherein the extension software package is an extension software package carrying a system upgrade submodule, an extension software package carrying a system backup submodule, an extension software package carrying a system recovery submodule, an extension software package carrying a system detection submodule, an extension software package carrying a user information backup submodule; an extension software package carrying a user information recovery submodule; an extension software package carrying an application program extension submodule, or an extension software package carrying an anti-virus submodule.
